# EUROPÄISCHE PATENTSCHRIFT

(11) **EP 1 796 408 B1**
(45) Veröffentlichungstag und Bekanntmachung des Hinweises auf die Patenterteilung: **18.06.2008**
(21) Anmeldenummer: 05026962.0
(22) Anmeldetag: 09.12.2005
(51) Int. Cl.: H04Q 7/30

(54) **Funkkommunikation im Anschluss an das Einschalten einer Teilnehmerstation**
Radio communication after the switch-on of a subscriber station
Communication radio après la mise en marche d'une station d'abonné

(43) Veröffentlichungstag der Anmeldung: 13.06.2007
(73) Patentinhaber: SIEMENS AKTIENGESELLSCHAFT, 80333 München (DE)
(72) Erfinder: Färber, Michael, 82515 Wolfratshausen (DE); Kroth, Norbert, 14482 Potsdam (DE)

(56) Entgegenhaltungen:
- WO-A-01/52432
- US-B1- 6 519 457

## Beschreibung

Die Erfindung betrifft ein Verfahren zur Kommunikation in einem Funkkommunikationssystem im Anschluss an das Einschalten einer Teilnehmerstation.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige Teilnehmerstationen oder netzseitige Funkstationen wie Repeater, Funkzugangspunkte oder Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Der Zugriff von Teilnehmerstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Teilnehmerstationen aufgeteilt werden. Auch Kombinationen von Vielfachzugriffsverfahren sind möglich, wie z.B. die Kombination eines Frequenzbereichs-Vielfachzugriffsverfahrens mit einem Codebereichs-Vielfachzugriffsverfahren.

Aus der WO 01/52432 A1 ist ein drahtloses Teilnehmeranschlusssystem bekannt, bei dem eine intelligente Basisstationen zum einen Verbindungen zu Teilnehmerendgeräten, zum anderen eine Verbindung zu einer auf dem GSM-Standard basierenden Mobilvermittlungsstelle, ohne Einbindung einer Basisstationssteuerung, aufbauen kann.

Der Erfindung liegt die Aufgabe zugrunde, ein effizientes Verfahren zur Kommunikation in einem Funkkommunikationssystem aufzuzeigen, bei welchem eine Kommunikation mit einer Teilnehmerstation nach dem Einschalten der Teilnehmerstation erfolgt. Weiterhin soll ein Funkkommunikationssystem zur Durchführung des Verfahrens aufgezeigt werden.

Diese Aufgabe wird durch ein Verfahren mit den Merkmalen des Patentanspruchs 1 und durch ein Funkkommunikationssystem mit Merkmalen des nebengeordneten Patentanspruchs 14 gelöst. Vorteilhafte Ausgestaltungen und Weiterbildungen sind Gegenstand von abhängigen Patentansprüchen.

Bei dem erfindungsgemäßem Verfahren zur Kommunikation in einem Funkkommunikationssystem, welches zumindest eine erste netzseitige Funkstation und eine zweite netzseitige Funkstation umfasst, welche beide mit einem Kernnetz verbunden sind, empfängt die erste netzseitige Funkstation eine Anmeldenachricht einer Teilnehmerstation. Die Anmeldenachricht dient dem erstmaligen Anmelden der Teilnehmerstation bei einer netzseitigen Funkstation, nachdem die Teilnehmerstation eingeschaltet wurde. Im Anschluss an den Empfang der Anmeldenachricht erfolgt eine Kommunikation zwischen dem Kernnetz und der Teilnehmerstation. Im Rahmen bzw. zu Beginn dieser Kommunikation werden von dem Kernnetz an die Teilnehmerstation zu versendende Signalisierungsnachrichten von dem Kernnetz an die zweite netzseitige Funkstation übertragen, von der zweiten netzseitigen Funkstation an die erste netzseitige Funkstation oder an eine andere netzseitige Funkstation übertragen, und von der ersten oder der anderen netzseitigen Funkstation direkt an die Teilnehmerstation übertragen.

Das betrachtete Funkkommunikationssystem weist zumindest zwei verschiedene netzseitige Funkstationen, nämlich die erste und die zweite netzseitige Funkstation, und ein Kernnetz auf. Die netzseitigen Funkstationen zeichnen sich u.a. dadurch aus, dass sie jeweils mit Teilnehmerstationen per Funk kommunizieren können. Das Kernnetz hingegen umfasst weitere Einrichtungen, welche nicht direkt mit Teilnehmerstationen per Funk kommunizieren.

Eine Teilnehmerstation wird eingeschaltet und sendet zur Anmeldung eine Anmeldenachricht an die erste netzseitige Funkstation. Die anschließend stattfindende Kommunikation der Teilnehmerstation mit dem Kernnetz kann unmittelbar nach dem Abschluss des Anmeldevorgangs erfolgen. Es ist jedoch auch möglich, dass sich die Teilnehmerstation nach dem Anmelden eine gewisse Zeit in dem eingeschalteten Zustand befindet, bevor die Kommunikation mit dem Kernnetz erfolgt. Bei der Kommunikation mit dem Kernnetz kann es sich beispielsweise um eine Sprachübertragung, z.B. um einen von der Teilnehmerstation abgehenden oder um einen für die Teilnehmerstation ankommenden Anruf handeln, oder um eine Datenübertragung von oder zu der Teilnehmerstation. Über das Kernnetz kann die Teilnehmerstation mit einer anderen Teilnehmerstation des gleichen oder eines anderen Funkkommunikationssystems, oder auch mit Einrichtungen eines andersartigen Kommunikationssystems, wie z.B. des Internets, kommunizieren.

Die Kommunikation der Teilnehmerstation mit dem Kernnetz kann die Übertragung von Nachrichten mit Nutzinformationen und/oder Signalisierungsnachrichten in Aufwärts- und/oder Abwärtsrichtung umfassen. Vorzugsweise werden im Rahmen der Kommunikation zwischen der Teilnehmerstation mit dem Kernnetz sowohl Nutz- als auch Signalisierungsinformationen übertragen. Bei Nutzinformationen handelt es sich in Abwärtsrichtung um Informationen, welche dem Nutzer der Teilnehmerstation zumindest teilweise zur Kenntnis gebracht werden, z.B. durch akustische oder optische Signale. Signalisierungsnachrichten hingegen beinhalten Informationen, welche der erfolgreichen Übertragung von Nutzinformationen oder der Aufrechterhaltung der Verbindung zwischen der Teilnehmerstation und dem Kernnetz dienen, dem Nutzer der Teilnehmerstation jedoch nicht zur Kenntnis gebracht werden. Signalisierungsnachrichten werden somit von niedrigeren Schichten des Protokollstapels benötigt als Nachrichten mit Nutzinformationen.

Signalisierungsnachrichten, welche von dem Kernnetz an die Teilnehmerstation zu versenden sind, werden zwar von der ersten netzseitigen Funkstation oder einer anderen netzseitigen Funkstation direkt per Funk an die Teilnehmerstation übertragen, zuvor werden sie jedoch von der zweiten netzseitigen Funkstation empfangen und weitergeleitet. Hierbei erfolgt die Übertragung zwischen dem Kernnetz und der zweiten netzseitigen Funkstation, sowie zwischen der zweiten netzseitigen Funkstation und der ersten oder der anderen netzseitigen Funkstation vorzugsweise direkt, d.h. ohne Weiterleitung der Signalisierungsnachrichten durch andere Einrichtungen. Es ist jedoch auch möglich, dass diese Übertragungen durch Weiterleitung der Signalisierungsnachrichten erfolgen. Über die Route, welche über die zweite netzseitige Funkstation verläuft, werden vorzugsweise zu Beginn der Kommunikation zwischen dem Kernnetz und der Teilnehmerstation alle Signalisierungsnachrichten, welche von dem Kernnetz an die Teilnehmerstation zu versenden sind, übertragen. Alternativ ist es auch möglich, dass lediglich ein Teil dieser Signalisierungsnachrichten über die zweite netzseitige Funkstation übertragen werden. Die Übertragung erfolgt zumindest zu Beginn der Kommunikation über die zweite netzseitige Funkstation, d.h. es ist möglich, dass eine Weiterleitung über die zweite netzseitige Funkstation nicht während des gesamten Verlaufs der Kommunikation zwischen dem Kernnetz und der Teilnehmerstation erfolgt. Vorzugsweise bedeutet "zu Beginn der Kommunikation", dass die beschriebene Übertragungsweise so lange verwendet wird, bis an die Stelle der zweiten netzseitigen Funkstation eine andere netzseitige Funkstation tritt, welche Nachrichten wie zuvor die zweite netzseitige Funkstation weiterleitet.

Die direkte Funkübertragung zur Teilnehmerstation hin erfolgt durch die erste netzseitige Funkstation oder eine andere netzseitige Funkstation, wobei es sich bei der anderen netzseitigen Funkstation nicht um die zweite netzseitige Funkstation handelt. Von welcher netzseitigen Funkstation die Teilnehmerstation die Nachrichten im Rahmen der Kommunikation mit dem Kernnetz direkt empfängt, hängt vorzugsweise von dem Aufenthaltsort der Teilnehmerstation ab. Bewegt sich die Teilnehmerstation beispielsweise nach dem Anmelden bei der ersten netzseitigen Funkstation von dem Funkabdeckungsbereich der ersten netzseitigen Funkstation weg in den Funkabdeckungsbereich einer anderen netzseitigen Funkstation, so kann die direkte Kommunikation der Teilnehmerstation mit dieser anderen netzseitigen Funkstation erfolgen.

Einer vorteilhaften Weiterbildung der Erfindung gemäß werden Signalisierungsnachrichten von der zweiten netzseitigen Funkstation an die erste oder an eine andere netzseitige Funkstation und von der ersten oder der anderen netzseitigen Funkstation direkt an die Teilnehmerstation übertragen. Zusätzlich oder alternativ werden Signalisierungsnachrichten von der Teilnehmerstation direkt an die erste oder eine andere netzseitige Funkstation und von der ersten oder der anderen netzseitigen Funkstation an die zweite netzseitige Funkstation übertragen. Hierbei ist die zweite netzseitige Funkstation jeweils der Endknoten dieser Übertragungen. Diese Weiterbildung betrifft vorzugsweise bestimme Arten von Signalisierungsnachrichten. Dass die zweite netzseitige Funkstation Endpunkt der Übertragung ist, bedeutet, dass die betreffenden von der zweiten netzseitigen Funkstation an die Teilnehmerstation übertragenen Signalisierungsnachrichten nicht von dem Kernnetz stammen, und dass die betreffenden von der Teilnehmerstation an die zweite netzseitige Funkstation übertragenen Signalisierungsnachrichten nicht an das Kernnetz weitergeleitet werden. Das Kernnetz ist betreffend diese Signalisierungsnachrichten somit nicht in die Kommunikation mit der Teilnehmerstation involviert. Dies erweist sich als vorteilhaft insbesondere in Bezug auf Handover betreffende Signalisierungsnachrichten und durchzuführende oder durchgeführte Messungen betreffende Signalisierungsnachrichten.

In Ausgestaltung der Erfindung sendet die erste netzseitige Funkstation nach Empfang der Anmeldenachricht der zweiten netzseitigen Funkstation Informationen betreffend die Teilnehmerstation, woraufhin die zweite netzseitige Funkstation dem Kernnetz Informationen betreffend die Teilnehmerstation sendet. Auf diese Weise kann sichergestellt werden, dass eine Übertragung von Signalisierungsnachrichten in Abwärtsrichtung über die Route von dem Kernnetz über die zweite netzseitige Funkstation an die Teilnehmerstation erfolgen kann. Insbesondere kann die Versendung der Informationen der Einrichtung von Verbindungen entlang der Route dienen. Vorteilhaft ist es zusätzlich, wenn die zweite netzseitige Funkstation nach Empfang der Informationen betreffend die Teilnehmerstation von der ersten netzseitigen Funkstation eine positive Bestätigungsnachricht an die erste netzseitige Funkstation sendet.

Einer Weiterbildung der Erfindung gemäß wird die zweite netzseitige Funkstation aus einer Mehrzahl von netzseitigen Funkstation ausgewählt. Die Mehrzahl kann z.B. vorkonfiguriert sein, indem diese aus netzseitigen Funkstationen mit bestimmten Eigenschaften besteht. Diese Auswahl wird vorzugsweise durch die erste netzseitige Funkstation oder durch eine Einrichtung, welche die erste netzseitige Funkstation über die Auswahl informiert, durchgeführt. Mit Vorzug erfolgt die Auswahl unter Verwendung von Informationen betreffend eine aktuelle Auslastung der zweiten netzseitigen Funkstation und/oder betreffend den Ort der zweiten netzseitigen Funkstation. Durch ersteres kann z.B. ein Lastausgleich zwischen verschiedenen netzseitigen Funkstation ermöglicht werden. Durch die zweite genannte Abhängigkeit kann berücksichtigt werden, wie die zweite netzseitige Funkstation im Bezug zum aktuellen oder einem zukünftigen Aufenthaltsort der Teilnehmerstation und/oder im Bezug zum Ort der ersten netzseitigen Funkstation liegt.

Bei der Kommunikation zwischen dem Kernnetz und der Teilnehmerstation kann es sich um eine von der Teilnehmerstation initiierte Kommunikation handeln. Hierbei wird die die Kommunikation beginnende oder den Beginn der Kommunikation anfordernde Nachricht von der Teilnehmerstation versandt. Alternativ kann es sich um eine vom Kernnetz initiierte Kommunikation handeln. Hierbei wird die die Kommunikation beginnende oder den Beginn der Kommunikation anfordernde Nachricht vom Kernnetz an die Teilnehmerstation versandt.

In Weiterbildung der Erfindung werden zumindest zu Beginn der Kommunikation von der Teilnehmerstation an das Kernnetz zu versendende Signalisierungsnachrichten von der Teilnehmerstation direkt an die erste netzseitige Funkstation oder an eine andere netzseitige Funkstation, von der ersten oder der anderen netzseitigen Funkstation an die zweite netzseitige Funkstation, und von der zweiten netzseitigen Funkstation an das Kernnetz übertragen. Dies entspricht der Aufwärtsrichtung des bereits für die Abwärtsrichtung erläuterten Verfahrens, so dass obige Ausführungen entsprechend gelten.

Einer vorteilhaften Weiterbildung der Erfindung gemäß werden zumindest zu Beginn der Kommunikation von dem Kernnetz an die Teilnehmerstation zu versendende Nachrichten mit Nutzinformationen von dem Kernnetz ohne Weiterleitung durch die zweite netzseitige Funkstation an die erste netzseitige Funkstation oder an eine andere netzseitige Funkstation, und von der ersten oder der anderen netzseitigen Funkstation direkt an die Teilnehmerstation übertragen. In diesem Fall werden zumindest für die Abwärtsrichtung unterschiedliche Übertragungspfade zwischen dem Kernnetz und der Teilnehmerstation für die Übertragung von Signalisierung einerseits und die Übertragung von Nutzinformationen andererseits verwendet. Vorteilhaft ist es ferner, wenn zusätzlich oder alternativ zumindest zu Beginn der Kommunikation von der Teilnehmerstation an das Kernnetz zu versendende Nachrichten mit Nutzinformationen von der Teilnehmerstation direkt an die erste netzseitige Funkstation oder an eine andere netzseitige Funkstation, und von der ersten oder der anderen netzseitigen Funkstation ohne Weiterleitung durch die zweite netzseitige Funkstation an das Kernnetz übertragen werden. In diesem Fall werden zumindest für die Aufwärtsrichtung unterschiedliche Übertragungspfade zwischen dem Kernnetz und der Teilnehmerstation für die Übertragung von Signalisierung einerseits und die Übertragung von Nutzinformationen andererseits verwendet.

Einer anderen Ausgestaltung der Erfindung gemäß werden zumindest zu Beginn der Kommunikation von dem Kernnetz an die Teilnehmerstation zu versendende Nachrichten mit Nutzinformationen von dem Kernnetz an die zweite netzseitige Funkstation, von der zweiten netzseitigen Funkstation an die erste netzseitige Funkstation oder an eine andere netzseitige Funkstation, und von der ersten oder der anderen netzseitigen Funkstation direkt an die Teilnehmerstation übertragen. In diesem Fall wird zumindest für die Abwärtsrichtung der gleiche Übertragungspfad zwischen dem Kernnetz und der Teilnehmerstation für die Übertragung von Signalisierung einerseits und die Übertragung von Nutzinformationen andererseits verwendet. Vorteilhaft ist es ferner, wenn zusätzlich oder alternativ zumindest zu Beginn der Kommunikation von der Teilnehmerstation an das Kernnetz zu versendende Nachrichten mit Nutzinformationen von der Teilnehmerstation direkt an die erste netzseitige Funkstation oder an eine andere netzseitige Funkstation, von der ersten oder der anderen netzseitigen Funkstation an die zweite netzseitige Funkstation, und von der zweiten netzseitigen Funkstation an das Kernnetz übertragen werden. In diesem Fall wird zumindest für die Aufwärtsrichtung der gleiche Übertragungspfad zwischen dem Kernnetz und der Teilnehmerstation für die Übertragung von Signalisierung einerseits und die Übertragung von Nutzinformationen andererseits verwendet.

In Weiterbildung der Erfindung wechselt die netzseitige Funkstation, mit welcher die Teilnehmerstation direkt kommuniziert, wobei die Funktion der zweiten netzseitigen Funkstation betreffend die Weiterleitung von Nachrichten zwischen dem Kernnetz und der Teilnehmerstation gleich bleibt. Hierdurch kann berücksichtigt werden, dass die Teilnehmerstation sich fortbewegen kann. Es ist nämlich oftmals nicht möglich oder vorteilhaft, wenn die netzseitige Funkstation, mit welcher die Teilnehmerstation direkt kommuniziert, die gleiche bleibt, wenn sich die Teilnehmerstation fortbewegt. Gemäß dieser Ausgestaltung kann der Pfad zur Übertragung von Signalisierungs- und gegebenenfalls auch Nutzinformationen trotz des Wechsels der direkt mit der Teilnehmerstation kommunizierenden netzseitigen Funkstation nach wie vor über die zweite netzseitige Funkstation verlaufen.

Vorteilhaft ist es, wenn die Funktion der zweiten netzseitigen Funkstation betreffend die Weiterleitung von Nachrichten zwischen dem Kernnetz und der Teilnehmerstation von einer dritten netzseitigen Funkstation übernommen wird. Auf diese Weise kann der Pfad zur Übertragung von Signalisierungs- und gegebenenfalls auch Nutzinformationen anfänglich über die zweite netzseitige Funkstation verlaufen, und später über eine dritte netzseitige Funkstation.

Das erfindungsgemäße Funkkommunikationssystem weist Mittel der ersten netzseitigen Funkstation auf zum Empfangen einer Anmeldenachricht von der Teilnehmerstation zur erstmaligen Anmeldung der Teilnehmerstation bei einer netzseitigen Funkstation nach einem Einschalten der Teilnehmerstation, sowie Mittel zum Übertragen von von dem Kernnetz an die Teilnehmerstation zur versendenden Signalisierungsnachrichten im Rahmen bzw. zu Beginn einer Kommunikation zwischen der Teilnehmerstation und dem Kernnetz von dem Kernnetz an die zweite netzseitige Funkstation, von der zweiten netzseitigen Funkstation an die erste oder eine andere netzseitige Funkstation, und von der ersten oder der anderen netzseitigen Funkstation direkt an die Teilnehmerstation.

Das erfindungsgemäße Funkkommunikationssystem eignet sich insbesondere zur Durchführung des erfindungsgemäßen Verfahrens, wobei dies auch auf die Ausgestaltungen und Weiterbildungen zutreffen kann. Hierzu kann es weitere geeignete Mittel umfassen.

Im folgenden wird die Erfindung anhand eines Ausführungsbeispiels näher erläutert. Dabei zeigen:
- Figur 1:: einen Ausschnitt aus einem Funkkommunikationssystem,
- Figur 2:: beispielhaft einen Ablaufdiagramm eines Verfahrens gemäß der Erfindung.

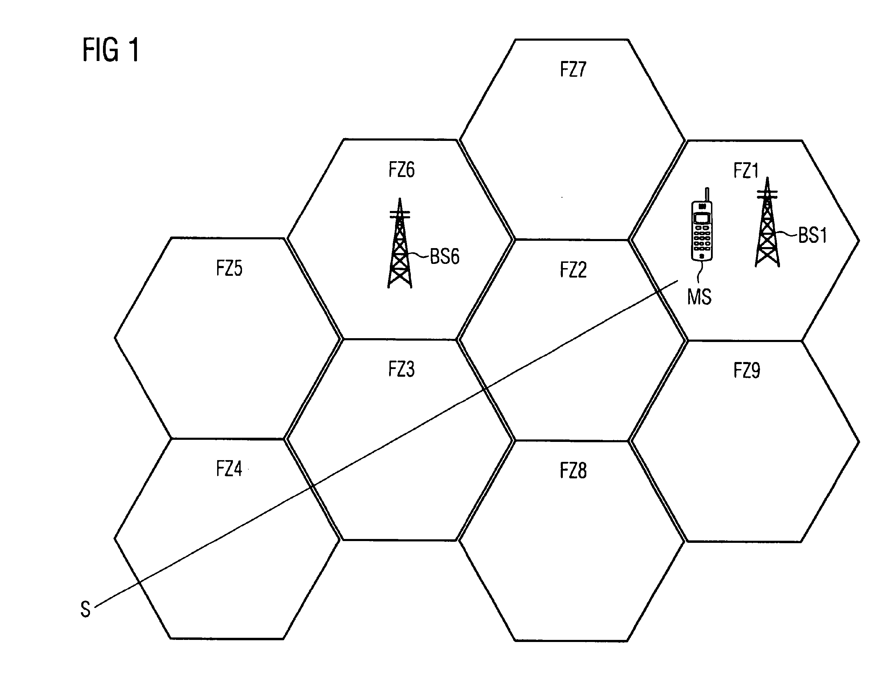

Figur 1 zeigt einen Ausschnitt aus einem zellularen Funkkommunikationssystem, welcher die Funkzellen FZ1, FZ2, FZ3, FZ4, FZ5, FZ6, FZ7, FZ8 und FZ9 umfasst. In den Funkzellen FZ1 bis FZ9 kommuniziert jeweils eine Basisstation mit in der jeweiligen Funkzelle befindlichen Teilnehmerstationen. Beispielhaft sind die Basisstation BS1 der Funkzelle FZ1 und die Basisstation BS6 der Funkzelle FZ6 dargestellt. Die Basisstationen der Funkzellen FZ1 bis FZ9 sind durch eine geeignete Kommunikationsverbindung, z.B. über Funk oder Leitung, miteinander verbunden, so dass jede Basisstation mit jeder anderen Basisstation entweder direkt oder über andere Basisstationen kommunizieren kann. Weiterhin ist jede Basisstationen der Funkzellen FZ1 bis FZ9 an ein nicht dargestelltes Kernnetz CN angebunden.

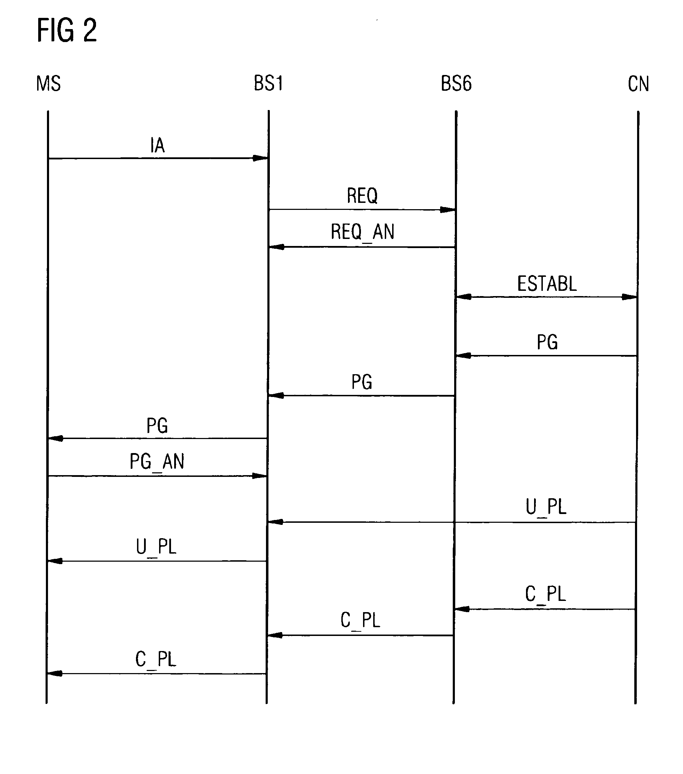

In der Funkzelle FZ1 der Basisstation BS1 befindet sich die Teilnehmerstation MS. Es wird beispielhaft der Fall betrachtet, dass sich in der Funkzelle FZ1 ein Flughafen befindet, und dass die Teilnehmerstation MS in dem Flughafen angeschaltet wird. Aufgrund dieses Statuswechsels von dem ausgeschalteten in den eingeschalteten Zustand muss sich die Teilnehmerstation MS bei dem Mobilfunkkommunikationssystem anmelden. Figur 2 zeigt ein Ablaufdiagramm des Verfahrens, wobei Verfahrensschritte, welche zwischen der Teilnehmerstation MS und der Basisstation BS1, zwischen der Basisstation BS1 und der Basisstation BS6, sowie zwischen der Basisstation BS6 und den Kernnetz CN ablaufen, dargestellt sind.

Zu Beginn kontaktiert die Teilnehmerstation MS im Rahmen der initialen Registrierung im Schritt IA (IA: Initial Access) die Basisstation BS1, in deren Funkzelle FZ1 sie sich befindet. Die Auswahl der Funkzelle FZ1 bzw. der der Funkzelle FZ1 zugeordneten Basisstation BS1 durch die Teilnehmerstation MS kann unter Verwendung geeigneter Kriterien wie der von der Teilnehmerstation MS erfahrenen Empfangsstärke von Signalen der Basisstation BS1, welche ein Maß für die Funkbedingungen zwischen der Basisstation BS1 und der Teilnehmerstation MS darstellt, erfolgen. Der Verfahrensschritt IA kann einer an sich bekannten Prozedur zur Kontaktaufnahme zwischen einer Teilnehmerstation und einer netzseitigen Funkstation für den Fall sein, dass die Teilnehmerstation zuvor nicht bei dem Mobilfunkkommunikationssystem angemeldet war und nun aufgrund eines Statuswechsels von dem ausgeschalteten in den eingeschalteten Zustand eine Anmeldung erfolgt.

Im folgenden Schritt REQ sendet die Basisstation BS1 eine Anfrage an die Basisstation BS6. Diese Anfrage ist darauf gerichtet, ob die Basisstation BS6 für die Teilnehmerstation MS eine im folgenden näher erläuterte Ankerfunktion wahrnehmen kann. Die Basisstation BS6 sendet daraufhin im Verfahrensschritt REQ_AN eine positive Antwort betreffend die Anfrage.

Im folgenden wird im Verfahrensschritt ESTABL zwischen dem Kernnetz CN und der Basisstation BS6 vereinbart, dass Signalisierungsnachrichten, welche von dem Kernnetz CN an die Teilnehmerstation MS zu senden sind, sowie Signalisierungsnachrichten, welche von der Teilnehmerstation MS an das Kernnetz CN zu senden sind, über die Basisstation BS6 weitergeleitet werden. Diese Signalisierungsnachrichten werden bei UMTS als C-Plane oder Control-Plane Nachrichten bezeichnet.

Die Teilnehmerstation MS ist zwar eingeschaltet und bei dem Mobilunkkommunikationssystem angemeldet, jedoch findet in diesem Zustand, welcher oftmals "idle" bezeichnet wird, kein Nachrichtenaustausch zwischen der Teilnehmerstation MS und der Basisstation BS1 statt. Die Teilnehmerstation MS muss sich lediglich dann, wenn sie einen bestimmten Bereich von Funkzellen, die so genannte Paging Area, verlässt, über die neue Basisstation anmelden.

Im folgenden wird davon ausgegangen, dass vom Netz Nachrichten an die Teilnehmerstation MS zu übertragen sind. Diese Situation tritt z.B. dann auf, wenn ein kommender Anruf für die Teilnehmerstation MS vorliegt. Es wird eine Paging-Nachricht PG von dem Kernnetz CN an die Ankerbasisstation BS6 gesendet, welche die Paging-Nachricht PG an die Basisstation BS1 und vorzugsweise an mehrere andere Basisstationen weiterleitet, welche die Paging-Nachricht PG ausstrahlen. D.h. die Paging-Nachricht PG wird von der Basisstation BS1 an die Teilnehmerstation MS gesendet. Bei der Paging-Nachricht PG handelt es sich um eine Signalisierungsnachricht, daher wird sie von dem Kernnetz an die Basisstation BS6, welche die Ankerfunktion für die Teilnehmerstation MS wahrnimmt, und die Paging-Nachricht PG weiterleitet, gesendet.

Die Teilnehmerstation MS antwortet auf die Paging-Nachricht PG mit einer Nachricht PG_AN, welche sie an die Basisstation BS1 sendet. Durch den Austausch der Nachrichten PG und PG_AN oder durch einen Austausch weiterer Nachrichten zwischen der Teilnehmerstation MS und der Basisstation BS1 wird der im folgenden für Nachrichtenübertragungen zwischen der Teilnehmerstation MS und der Basisstation BS1 verwendete Funkkanal, bei UMTS als "radio bearer" bezeichnet, eingerichtet. Weiterhin wird, nicht in Figur 2 dargestellt, eine Signalisierungsverbindung zwischen der Basisstation BS1 und der Ankerbasisstation BS6, sowie eine Signalisierungsverbindung zwischen der Ankerbasisstation BS6 und dem Kernnetz CN eingerichtet. Für die Nutzdatenübertragung wird vorzugsweise eine direkte Verbindung zwischen der Basisstation BS1 und dem Kernnetz CN aufgebaut, so dass Nachrichten mit Nutzdaten nicht notwendigerweise über die Ankerbasisstation BS6 übertragen werden müssen.

Alternativ zu dem in Figur 2 dargestellten Fall, gemäß welchem vom Kernnetz CN ausgehend die Paging-Nachricht PG an die Teilnehmerstation MS gesendet wird, ist es auch möglich, dass die Teilnehmerstation MS die Kommunikation mit der Basisstation BS1 initiiert, indem sie eine Nachricht an die Basisstation BS1 sendet, mit welcher die Zuweisung von Funkressourcen angefordert wird. Diese Situation tritt z.B. dann auf, wenn ein von der Teilnehmerstation MS abgehender Anruf vorliegt. Auch in diesem Fall der von der Teilnehmerstation MS angestoßenen Kommunikation wird ein Funkkanal zwischen der Teilnehmerstation MS und der Basisstation BS1, sowie die weiteren oben beschriebenen Verbindungen eingerichtet.

Informationen über die erfolgreiche Herstellung einer Verbindung zwischen der Teilnehmerstation MS und der Basisstation BS1 können, nicht in Figur 2 dargestellt, von der Basisstation BS1 direkt oder über die Basisstation BS6 an das Kernnetz CN gesendet werden. Nach dem erfolgreichen Pagen der Teilnehmerstation MS wird eine Nachricht U_PL mit Nutzdaten von dem Kernnetz CN an die Basisstation BS1 übertragen, von welcher sie an die Teilnehmerstation MS versendet wird. Nachrichten mit Nutzdaten, im UMTS als User-Plane oder U-Plane Nachrichten bezeichnet, werden somit nicht über die Basisstation BS6, welche die Ankerfunktion für die Teilnehmerstation MS wahrnimmt, übertragen. Dies gilt sowohl für die Abwärtsrichtung, d.h. für Übertragungen von dem Kernnetz CN an die Teilnehmerstation MS, als auch für die Aufwärtsrichtung, d.h. für Übertragungen von der Teilnehmerstation MS an das Kernnetz CN.

Im Rahmen der Kommunikation an die Teilnehmerstation MS zu übertragende Signalisierungsnachrichten C_PL werden von dem Kernnetz CN über die Basisstation BS6 an die Basisstation BS1 übertragen, von welcher sie an die Teilnehmerstation MS gesendet werden. Dies gilt sowohl für die Abwärtsrichtung, d.h. für Übertragungen von dem Kernnetz CN an die Teilnehmerstation MS, als auch für die Aufwärtsrichtung, d.h. für Übertragungen von der Teilnehmerstation MS an das Kernnetz CN.

In Bezug auf die Signalisierungsnachrichten gilt folgendes: während die Teilnehmerstation MS über die Basisstation BS1 und die Ankerbasisstation BS6 mit dem Kernnetz CN kommuniziert, ist aus Sicht des Kernnetzes CN und der Teilnehmerstation MS die Ankerbasisstation BS6 der Endpunkt bzw. Ansprechpartner für die Kommunikation. Bewegt sich die Teilnehmerstation MS im Laufe der Kommunikation fort, z.B. entlang der Straße S in Figur 1, wechselt die Basisstation, mit welcher sie kommuniziert von der Basisstation BS1 zu der Basisstation der Funkzelle FZ2, weiterhin zu der Basisstation der Funkzelle FZ3, usw. Die Rolle der Basisstation BS6 als Ansprechpartner für das Kernnetz CN betreffend Signalisierungsnachrichten kann hierbei aufrecht erhalten bleiben. Die Mikromobilität der Teilnehmerstation MS, d.h. die Zellwechsel der Teilnehmerstation MS bei Aufrechterhaltung der Ankerfunktion der Basisstation BS6, ist für das Kernnetz CN in Bezug auf Signalisierungsnachrichten nicht sichtbar; vielmehr ist für Signalisierungsnachrichten die Ankerbasisstation der Endpunkt der Mikromobilitäts-Prozeduren. Hierdurch wird der Aufwand an Signalisierung in Radionetzwerk und zwischen Radionetzwerk und dem Kernnetz CN reduziert. Dies ist vorteilhaft in Bezug auf den Verarbeitungsaufwand im Radionetzwerk und im Kernnetz; weiterhin wäre im gegenteiligen Falle, nämlich wenn bei jedem Zellwechsel einer Teilnehmerstation das Kernnetz betreffend die auszutauschenden Signalisierungsnachrichten involviert wäre, aufgrund der großen räumlichen Distanz zwischen dem Kernnetz und der Teilnehmerstation eine zusätzlich zeitliche Verzögerung des Handovervorgangs unvermeidbar.

Gemäß Figur 2 werden die Nutzinformationen enthaltenden Nachrichten U_PL ohne den "Umweg" über die Ankerbasisstation BS6 an die Teilnehmerstation MS gesendet. Dies hat den Vorteil, dass der für die Übertragung von Nutzinformationen erforderliche Zeitaufwand verringert wird, so dass Echtzeitdienste besser umgesetzt werden können. Entgegen der Darstellung in Figur 2 ist es jedoch auch möglich, dass die Nutzinformationen enthaltenden Nachrichten U_PL wie auch die Signalisierungsnachrichten C_PL von der Ankerbasisstation BS6 weitergeleitet werden. Dies resultiert darin, dass die Nutz- und Signalisierungsinformationen auf die gleiche Weise von und zu der Teilnehmerstation MS übertragen werden, so dass obige Ausführungen betreffend die Signalisierungsnachrichten C_PL auch für die Nutznachrichten U_PL gelten.

Bewegt sich die Teilnehmerstation MS allzu weit weg von der Funkzelle FZ6 der Basisstation BS6, kann die Ankerfunktion der Basisstation BS6 von einer anderen Basisstation übernommen werden. Denn eine große Entfernung zwischen der Basisstation, mit welcher die Teilnehmerstation MS aktuell kommuniziert, und der Basisstation, welche die Ankerfunktion wahrnimmt, bedeutet eine große Zeitverzögerung, welche dadurch zustande kommt, dass die Nachrichten zwischen den beiden Basisstationen übertragen werden müssen. Bei der Makromobilität der Teilnehmerstation MS, d.h. bei Zellwechseln, welche einen Wechsel der Basisstation mit der Ankerfunktion bewirken, ist das Kernnetz im Gegensatz zur Mikromobilität beteiligt. Es wird entsprechend dem Verfahrensschritt ESTABL eine neue Verbindung zwischen dem Kernnetz CN und der neuen Ankerbasisstation eingerichtet.

Gemäß den obigen Ausführungen ist die Auswahl einer Basisstation zur Kommunikation mit der Teilnehmerstation MS, d.h. die anfängliche Auswahl der Basisstation BS1, getrennt von der Auswahl einer Basisstation, welche die Ankerfunktion gegenüber dem Kernnetz CN wahrnimmt, d.h. die Auswahl der Basisstation BS6. Die Ankerbasisstation hat hierbei einerseits die Rolle der Weiterleitung von Signalisierungsdaten bzw. Nutz- und Signalisierungsnachrichten zwischen der Teilnehmerstation MS und dem Kernnetz CN, und weiterhin die Funktion der Realisierung der Mikromobilität. Würde eine zu Kommunikationsbeginn zur Kommunikation mit einer Teilnehmerstation ausgewählte Basisstation automatisch auch die Rolle der Ankerbasisstation wahrnehmen, so könnte dies zu einer Häufung von Verarbeitungslast durch die Ankerfunktion bei einzelnen Basisstationen kommen. Im Beispiel der Figur 1 wählen sich alle Teilnehmerstationen von Flugzeugpassagieren, welche nach der Landung in dem Flughafen in der Funkzelle FZ1 eingeschaltet werden, bei der Basisstation BS1 ein. Müsste die Basisstation BS1 die Ankerfunktion für all diese Teilnehmerstationen übernehmen, könnte dies zu einer Überlastung der Basisstation BS1 führen.

Es ist möglich, dass alle Basisstationen grundsätzlich die Fähigkeit haben, als Ankerbasisstation zu fungieren. Alternativ können manche Basisstationen existieren, welche sowohl mit Teilnehmerstationen kommunizieren als auch die Funktion einer Ankerbasisstationen wahrnehmen können, während andere Basisstationen lediglich mit Teilnehmerstationen kommunizieren können.

Die Auswahl der Basisstation BS6 als Ankerbasisstation für die Kommunikation der Teilnehmerstation MS kann nach verschiedenen Kriterien erfolgen. Beispielsweise kann für eine Gruppe von Basisstationen eine oder mehrere Basisstationen definiert sein, welche als Ankerbasisstationen fungieren können. Diese können z.B. nach geographischen Kriterien ausgewählt werden. Vorteilhaft ist es, Basisstationen als mögliche Ankerbasisstationen einzurichten, welche sich in Regionen mit wenig Funkverkehrsaufkommen befinden. Auf diese Weise können freie Kapazitäten von Basisstationen, welche durch das geringe Funkverkehrsaufkommen in ihrer eigenen Funkzelle bedingt sind, zur Weiterleitung von Nachrichten von und zu anderen Basisstationen eingesetzt werden. Eine Basisstation, welche eine Ankerbasisstation benötigt, kontaktiert eine dieser vorgeschriebenen Basisstationen. Stehen hierfür mehrere zur Verfügung bzw. zur Auswahl, können die als Ankerbasisstation geeigneten Basisstationen ihre aktuell für die Durchführung der Ankerfunktion verfügbare Eigenschaften und Kapazität, die so genannten BS-Capabilities, an die anderen Basisstationen melden, so dass durch eine geeignete Auswahl der Ankerbasisstation ein Lastausgleich geschaffen werden kann. Alternativ kann die als Ankerbasisstation zu verwendende Basisstation, definiert durch ihre BS-Capabilities, durch das Betriebs- und Wartungssystem der Funkkommunikationssystems vorgegeben werden, so dass die Basisstationen keine Auswahlfreiheit hinsichtlich der Ankerbasisstation von bei ihnen nach dem Einschalten angemeldeten Teilnehmerstationen haben.

Bei der Auswahl einer Ankerbasisstation oder der Festlegung, welche Basisstationen grundsätzlich als Ankerbasisstationen fungieren können, können Informationen über von Mobilstationen verwendete Wege eingesetzt werden. Führt gemäß Figur 1 die Straße S von der Funkzelle FZ1 durch die Funkzellen FZ2, FZ3 und FZ4, so ist es vorteilhaft, eine Ankerbasisstation zu verwenden, deren Funkzelle sich in der Nähe der Straße befindet. Auf diese Weise kann eine Basisstation die Rolle der Ankerbasisstation über einen längeren Zeitraum erfüllen, ohne dass diese Rolle allzu oft auf andere Basisstationen übertragen werden muss. Ist eine Kreuzung zwischen zwei Straßen vorhanden, kann sich die Ankerbasisstation in der Nähe der Kreuzung befinden, so dass diese ihre Funktion als Ankerbasisstation unabhängig davon, für welche Straße sich ein Teilnehmer entscheidet, weiterhin ausüben kann, ohne allzu große Verzögerungen bei der Nachrichtenweiterleitung zu verursachen.

Wenn beispielsweise die Basisstation der Funkzelle FZ3 als Ankerbasisstation ausgewählt wird, so ist es möglich, dass diese Basisstation, wenn sich die Teilnehmerstation MS entlang der Straße S bewegt, für eine Zeit sowohl als Ankerbasisstation als auch als mit der Teilnehmerstation MS kommunizierende Basisstation fungiert. Während somit durch die Mobilität einer Teilnehmerstation hervorgerufen die Konstellation auftreten kann, dass es sich bei der mit der Teilnehmerstation kommunizierenden Basisstation und der die Ankerfunktion erfüllenden Basisstation um die gleiche Basisstation handelt, ist dies zu Beginn der Kommunikation nicht der Fall. Diejenige Basisstation, welche von einer sich nach dem Einschalten anmeldenden Teilnehmerstation kontaktiert wird, erfüllt nicht die Rolle der Ankerbasisstation, sondern fordert von einer anderen Basisstation die Erfüllung dieser Funktion an. Über welche Funkzelle bzw. Basisstation sich eine Teilnehmerstation nach dem Einschalten anmeldet, wird durch eine Wahl der Teilnehmerstation aufgrund von Funkausbreitungsbedingungen bzw. aufgrund der Position der Teilnehmerstation bestimmt. Hingegen wird die Ankerbasisstation nicht in Abhängigkeit von Funkkriterien bestimmt, vielmehr ist eine Bestimmung der Ankerbasisstation wie beschrieben nach geeigneteren Kriterien möglich.

Das beschriebene Vorgehen eignet sich insbesondere für Funkkommunikationssysteme mit flachen Hierarchien, in welchen beispielsweise Einrichtungen zur Kontrolle und Steuerung von Basisstationen, wie der BSC (Base Station Controller) oder der RNC (Radio Network Controller) nicht vorhanden sind. Dies führt zu einer Vereinfachung des Radionetzwerks. In diesem Fall müssen die Funktionen dieser Einrichtungen von anderen Einrichtungen des Funkkommunikationssystems übernommen werden. Ein Teil dieser Funktionen kann hierbei auf Basisstationen übertragen werden, während möglicherweise ein anderer Teil von Einrichtungen des Kernnetzes wahrgenommen werden kann. Hierbei ist es vorteilhaft, wenn bestimmte Funktionen nicht zwingend von jeder Basisstation bereit gestellt werden müssen. Eine als mögliche Ankerbasisstation klassifizierte Basisstation kann spezifische Funktionalität und Rechenkapazität für Steuerungsaufgaben im Radionetz bereitstellen, wie z.B. Konfiguration und Auswertung von Messungen von Teilnehmerstationen und/oder Basisstationen, Handoverentscheidungen, Paging Koordination, Interferenz Kontrolle und Load Sharing.

## Patentansprüche

1. Verfahren zur Kommunikation in einem Funkkommunikationssystem, welches zumindest eine erste (BS1) und eine zweite (BS6) mit einem Kernnetz (CN) verbundene netzseitige Funkstation umfasst, bei dem
die erste netzseitige Funkstation (BS1) eine Anmeldenachricht (IA) von einer Teilnehmerstation (MS) zur erstmaligen Anmeldung der Teilnehmerstation (MS) bei einer netzseitigen Funkstation nach einem Einschalten der Teilnehmerstation (MS) empfängt, und im Anschluss eine Kommunikation zwischen dem Kernnetz (CN) und der Teilnehmerstation (MS) erfolgt,
**dadurch gekennzeichnet,**
**dass** im Rahmen der Kommunikation zwischen dem Kernnetz (CN) und der Teilnehmerstation (MS) von dem Kernnetz (CN) an die Teilnehmerstation (MS) zu versendende Signalisierungsnachrichten (PG, C_PL) von dem Kernnetz (CN) an die zweite netzseitige Funkstation (BS6), von der zweiten netzseitigen Funkstation (BS6) an die erste netzseitige Funkstation (BS1) oder an eine andere netzseitige Funkstation, und von der ersten (BS1) oder der anderen netzseitigen Funkstation direkt an die Teilnehmerstation (MS) übertragen werden.

2. Verfahren nach Anspruch 1, bei dem Signalisierungsnachrichten von der zweiten netzseitigen Funkstation (BS6) an die erste netzseitige Funkstation (BS1) oder an eine andere netzseitige Funkstation und von der ersten netzseitigen Funkstation (BS1) oder der anderen netzseitigen Funkstation direkt an die Teilnehmerstation (MS) übertragen werden und/oder von der Teilnehmerstation (MS) direkt an die erste netzseitige Funkstation (BS1) oder eine andere netzseitige Funkstation und von der ersten netzseitigen Funkstation (BS1) oder der anderen netzseitigen Funkstation an die zweite netzseitige Funkstation (BS6) übertragen werden, wobei die zweite netzseitige Funkstation (BS6) der Endknoten dieser Übertragungen ist.

3. Verfahren nach Anspruch 1 oder 2, bei dem die erste netzseitige Funkstation (BS1) nach Empfang der Anmeldenachricht (IA) der zweiten netzseitigen Funkstation (BS6) Informationen (REQ) betreffend die Teilnehmerstation (MS) sendet, woraufhin die zweite netzseitige Funkstation (BS6) dem Kernnetz (CN) Informationen (ESTABL) betreffend die Teilnehmerstation (MS) sendet.

4. Verfahren nach einem der Ansprüche 1 bis 3, bei dem die zweite netzseitige Funkstation (BS6) aus einer Mehrzahl von netzseitigen Funkstationen ausgewählt wird.

5. Verfahren nach Anspruch 4, bei dem die Auswahl unter Verwendung von Informationen betreffend eine aktuelle Auslastung der zweiten netzseitigen Funkstation (BS6) und/oder den Ort der zweiten netzseitigen Funkstation (BS6) erfolgt.

6. Verfahren nach einem der Ansprüche 1 bis 5, bei dem es sich bei der Kommunikation zwischen dem Kernnetz (CN) und der Teilnehmerstation (MS) um eine von der Teilnehmerstation (MS) initiierte Kommunikation oder um eine von dem Kernnetz (CN) initiierte Kommunikation handelt.

7. Verfahren nach einem der Ansprüche 1 bis 6, bei dem im Rahmen der Kommunikation zwischen dem Kernnetz (CN) und der Teilnehmerstation (MS) von der Teilnehmerstation (MS) an das Kernnetz (CN) zu versendende Signalisierungsnachrichten von der Teilnehmerstation (MS) direkt an die erste netzseitige Funkstation (BS1) oder an eine andere netzseitige Funkstation, von der ersten netzseitigen Funkstation (BS1) oder der anderen netzseitigen Funkstation an die zweite netzseitige Funkstation (BS6), und von der zweiten netzseitigen Funkstation (BS6) an das Kernnetz (CN) übertragen werden.

8. Verfahren nach einem der Ansprüche 1 bis 7, bei dem im Rahmen der Kommunikation zwischen dem Kernnetz (CN) und der Teilnehmerstation (MS) von dem Kernnetz (CN) an die Teilnehmerstation (MS) zu versendende Nachrichten mit Nutzinformationen (U_PL) von dem Kernnetz (CN) ohne Weiterleitung durch die zweite netzseitige Funkstation (BS6) an die erste netzseitige Funkstation (BS1) oder an eine andere netzseitige Funkstation, und von der ersten (BS1) oder der anderen netzseitigen Funkstation direkt an die Teilnehmerstation (MS) übertragen werden.

9. Verfahren nach einem der Ansprüche 1 bis 8, bei dem im Rahmen der Kommunikation zwischen dem Kernnetz (CN) und der Teilnehmerstation (MS) von der Teilnehmerstation (MS) an das Kernnetz (CN) zu versendende Nachrichten mit Nutzinformationen von der Teilnehmerstation (MS) direkt an die erste netzseitige Funkstation (BS1) oder an eine andere netzseitige Funkstation, und von der ersten netzseitigen Funkstation (BS1) oder der anderen netzseitigen Funkstation ohne Weiterleitung durch die zweite netzseitige Funkstation (BS6) an das Kernnetz (CN) übertragen werden.

10. Verfahren nach einem der Ansprüche 1 bis 7, bei dem im Rahmen der Kommunikation zwischen dem Kernnetz (CN) und der Teilnehmerstation (MS) von dem Kernnetz (CN) an die Teilnehmerstation (MS) zu versendende Nachrichten mit Nutzinformationen von dem Kernnetz (CN) an die zweite netzseitige Funkstation (BS6), von der zweiten netzseitige Funkstation (BS6) an die erste netzseitige Funkstation (BS1) oder an eine andere netzseitige Funkstation, und von der ersten (BS1) oder der anderen netzseitigen Funkstation direkt an die Teilnehmerstation (MS) übertragen werden.

11. Verfahren nach einem der Ansprüche 1 bis 7 oder Anspruch 10, bei dem im Rahmen der Kommunikation zwischen dem Kernnetz (CN) und der Teilnehmerstation (MS) von der Teilnehmerstation (MS) an das Kernnetz (CN) zu versendende Nachrichten mit Nutzinformationen von der Teilnehmerstation (MS) direkt an die erste netzseitige Funkstation (BS1) oder an eine andere netzseitige Funkstation, von der ersten netzseitigen Funkstation (BS1) oder der anderen netzseitigen Funkstation an die zweite netzseitige Funkstation (BS6), und von der zweiten netzseitigen Funkstation (BS6) an das Kernnetz (CN) übertragen werden.

12. Verfahren nach einem der Ansprüche 1 bis 11, bei dem die netzseitige Funkstation, mit welcher die Teilnehmerstation (MS) direkt kommuniziert, wechselt bei gleich bleibender Funktion der zweiten netzseitigen Funkstation (BS6) betreffend die Weiterleitung von Nachrichten zwischen dem Kernnetz (CN) und der Teilnehmerstation (MS).

13. Verfahren nach einem der Ansprüche 1 bis 12, bei dem die Funktion der zweiten netzseitigen Funkstation (BS6) betreffend die Weiterleitung von Nachrichten zwischen dem Kernnetz (CN) und der Teilnehmerstation (MS) von einer dritten netzseitigen Funkstation übernommen wird.

14. Funkkommunikationssystem, welches zumindest eine Teilnehmerstation (MS), sowie eine erste (BS1) und eine zweite (BS6) mit einem Kernnetz (CN) verbundene netzseitige Funkstation umfasst, mit Mitteln der ersten netzseitigen Funkstation (BS1) zum Empfangen einer Anmeldenachricht (IA) von der Teilnehmerstation(MS) zur erstmaligen Anmeldung der Teilnehmerstation (MS) bei einer netzseitigen Funkstation nach einem Einschalten der Teilnehmerstation (MS),
**gekennzeichnet durch**
Mittel zum Übertragen im Rahmen einer Kommunikation zwischen der Teilnehmerstation (MS) und dem Kernnetz (CN) von von dem Kernnetz (CN) an die Teilnehmerstation (MS) zu versendenden Signalisierungsnachrichten (PG, C_PL) von dem Kernnetz (CN) an die zweite netzseitige Funkstation (BS6), von der zweiten netzseitigen Funkstation (BS6) an die erste netzseitige Funkstation (BS1) oder an eine andere netzseitige Funkstation, und von der ersten (BS1) oder der anderen netzseitigen Funkstation direkt an die Teilnehmerstation (MS).

## Claims

1. Method for communicating in a radio communication system comprising at least a first (BS1) and a second (BS6) radio station that are located at the network end and are connected to a core network (CN), in which the first radio station (BS1) located at the network end receives a registration message (IA) from a user station (MS) to register said user station (MS) for the first time in a radio station located at the network end after the user station (MS) has been switched on, and communication subsequently takes place between the core network (CN) and the user station (MS)
**characterised in that**
within the scope of the communication between the core network (CN) and the user station (MS), signalling messages (PG, C_ PL) that are to be sent from the core network (CN) to the user station (MS) are transmitted from the core network (CN) to the second radio station (BS6) located at the network end, from the second radio station (BS6) located at the network end to the first radio station (BS1) or another radio station located at the network end, and from the first radio station (BS1) or the other radio station located at the network end directly to the user station (MS).

2. Method according to claim 1, in which
signalling messages from the second radio station (BS6) located at the network end are transmitted to the first radio station (BS1) located at the network end or to another radio station located at the network end and from the first radio station (BS1) located at the network end or the other radio station located at the network end directly to the user station (MS) and/or from the user station (MS) directly to the first radio station (BS1) located at the network end or another radio station located at the network end and from the first radio station (BS1) located at the network end or the other radio station located at the network end to the second radio station (BS6) located at the network end, whereby the second radio station (BS6) located at the network end is the end node of these transmissions.

3. Method according to claim 1 or 2, in which
after receipt of the registration message (IA) the first radio station (BS1) located at the network end sends information (REQ) relating to the user station (MS) to the second radio station (BS6) located at the network end, whereupon the second radio station (BS6) located at the network end sends information (ESTABL) relating to the user station (MS) to the core network (CN).

4. Method according to one of claims from 1 to 3, in which the second radio station (BS6) located at the network end is selected from a plurality of radio stations located at the network end.

5. Method according to claim 4, in which
the selection is made using information relating to a current load of the second radio station (BS6) located at the network end and/or the location of the second radio station (BS6) located at the network end.

6. Method according to one of claims 1 to 5, in which the communication between the core network (CN) and the user station (MS) concerns a communication initiated by the user station (MS) or by the core network (CN).

7. Method according to one of claims 1 to 6, in which within the scope of the communication between the core network (CN) and the user station (MS), signalling messages to be sent from the user station (MS) to the core network (CN) are transmitted from the user station (MS) directly to the first radio station (BS1) located at the network end or another radio station located at the network end, from the first radio station (BS1) located at the network end or the other radio station located at the network end to the second radio station (BS6) located at the network end and from the second radio station (BS6) located at the network end to the core network (CN).

8. Method according to one of claims 1 to 7, in which within the scope of the communication between the core network (CN) and the user station (MS) messages with useful information (U_PL) to be sent from the core network (CN) to the user station (MS) are transmitted from the core network (CN), without forwarding through the second radio station (BS6) located at the network end, to the first user station (BS1) located at the network end or to another radio station located at the network end, and from the first (BS1) or the other radio station located at the network end directly to the user station (MS).

9. Method according to one of the claims 1 to 8, in which within the scope of the communication between the core network (CN) and the user station (MS), messages with useful information to be sent from the user station (MS) to the core network (CN) are transmitted from the user station (MS) directly to the first radio station (BS1) located at the network end or to another radio station located at the network end, and from the first radio station (BS1) located at the network end or the other radio station located at the network end without forwarding through the second radio station (BS6) located at the network end to the core network (CN).

10. Method according to one of claims 1 to 7, in which within the scope of the communication between the core network (CN) and the user station (MS) messages with useful information to be sent from the core network (CN) to the user station (MS) are transmitted from the core network (CN) to the second radio station (BS6) located at the network end, from the second radio station (BS6) located at the network end to the first radio station (BS1) located at the network end or to another radio station located at the network end, and from the first (BS1) or the other radio station located at the network end directly to the user station (MS).

11. Method according to one of claims 1 to 7 or claim 10, in which within the scope of communication between the core network (CN) and the user station (MS) messages with useful information to be sent from the user station (MS) to the core network (CN) are transmitted from the user station (MS) directly to the first radio station (BS1) located at the network end or to another radio station located at the network end, from the first (BS1) radio station located at the network end or the other radio station located at the network end to the second radio station (BS6) located at the network end, and from the second radio station (BS6) located at the network end to the core network (CN).

12. Method according to one of claims 1 to 11, in which the radio station located at the network end, with which the user station (MS) communicates directly, changes in the case of a constant function of the second radio station (BS6) located at the network end in respect of the forwarding of messages between the core network (CN) and the user station (MS).

13. Method according to one of claims 1 to 12, in which the function of the second radio station (BS6) located at the network end in respect of the forwarding of messages between the core network (CN) and the user station (MS) is assumed by a third user station located at the network end.

14. Radio communication system comprising at least one user station (MS) as well as a first (BS1) and a second (BS6) radio station located at the network end and connected to a core network (CN), having means of the first radio station (BS1) located at the network end to receive a registration message (IA) from the user station (MS) to register said user station (MS) for the first time in a radio station located at the network end after the user station (MS) has been switched on,
**characterized by**
means to transmit, within the scope of a communication between the user station (MS) and the core network (CN), signalling messages (PG, C_PL) to be sent from the core network (CN) to the user station (MS), from the core network (CN) to the second radio station (BS6) located at the network end, from the second radio station (BS6) located at the network end to the first radio station (BS1) located at the network end or to another radio station located at the network end and from the first (BS1) or the other radio station located at the network end directly to the user station (MS).

## Revendications

1. Procédé pour la communication dans un système de radiocommunication, qui comporte au moins une première station radio (BS1) et une seconde station radio (BS6) côté réseau, reliée à un réseau central (CN), dans lequel
la première station radio (BS1) côté réseau reçoit un message de demande (IA) d'une station d'abonné (MS) pour la première demande de connexion de la station d'abonné (MS) auprès d'une station radio côté réseau après la mise en marche de la station d'abonné (MS), et
une communication entre le réseau central (CN) et la station d' abonné (MS) intervient ensuite
**caractérisé en ce que**,
dans le cadre de la communication entre le réseau central (CN) et la station d'abonné (MS), des messages de signalisation (PG, C_PL) à envoyer du réseau central (CN) à la station d'abonné (MS) sont transmis du réseau central (CN) à la seconde station radio (BS6) côté réseau, de la seconde station radio (BS6) côté réseau à la première station radio (BS1) côté réseau ou à une autre station radio côté réseau et de la première station radio (BS1) ou de l'autre station radio côté réseau directement à la station d'abonné (MS).

2. Procédé selon la revendication 1, dans lequel
des messages de signalisation sont transmis de la seconde station radio (BS6) côté réseau à la première station radio (BS1) côté réseau ou à une autre station radio côté réseau et de la première station radio (BS1) côté réseau ou de l'autre station radio côté réseau directement à la station d'abonné (MS) et/ou de la station d'abonné (MS) directement à la première station radio (BS1) côté réseau ou à une autre station radio côté réseau et de la première station réseau (BS1) côté réseau ou de l'autre station radio côté réseau à la seconde station radio (BS6) côté réseau, la seconde station radio (BS6) côté réseau étant le noeud final de ces transmissions.

3. Procédé selon la revendication 1 ou 2, dans lequel
la première station radio (BS1) côté réseau envoie après la réception du message de demande (IA) de la seconde station radio (BS6) côté réseau des informations (REQ) concernant la station d'abonné (MS), après quoi la seconde station radio (BS6) côté réseau envoie au réseau central (CN) des informations (ESTABL) concernant la station d'abonné (MS).

4. Procédé selon l'une quelconque des revendications 1 à 3, dans lequel
la seconde station radio (BS6) côté réseau est sélectionné à partir d'une pluralité de stations radio côté réseau.

5. Procédé selon la revendication 4, dans lequel
la sélection s'effectue avec l'utilisation d'informations concernant une utilisation maximale actuelle de la seconde station radio (BS6) côté réseau et/ou l'emplacement de la seconde station radio (BS6) côté réseau.

6. Procédé selon l'une quelconque des revendications 1 à 5, dans lequel,
en ce qui concerne la communication entre le réseau central (CN) et la station d'abonné (MS), il s'agit d'une communication amorcée par la station d'abonné (MS) ou d'une communication amorcée par le réseau central (CN).

7. Procédé selon l'une quelconque des revendications 1 à 6, dans lequel,
dans le cadre de la communication entre le réseau central (CN) et la station d'abonné (MS), des messages de signalisation à envoyer de la station d'abonné (MS) au réseau central (CN) sont transmis de la station d'abonné (MS) directement à la première station radio (BS1) côté réseau ou à une autre station radio côté réseau, de la première station radio (BS1) côté réseau ou de l'autre station radio côté réseau à la seconde station radio (BS6) côté réseau, et de la seconde station radio (BS6) côté réseau au réseau central (CN).

8. Procédé selon l'une quelconque des revendications 1 à 7, dans lequel,
dans le cadre de la communication entre le réseau central (CN) et la station d'abonné (MS), des messages à envoyer du réseau central (CN) à la station d'abonné (MS) sont transmis avec des informations utiles (U_PL) du réseau central (CN) sans réacheminement par la seconde station radio (BS6) côté réseau à la première station radio (BS1) côté réseau ou à une autre station radio côté réseau, et de la première station radio (BS1) ou de l'autre station radio côté réseau directement à la station d'abonné (MS).

9. Procédé selon l'une quelconque des revendications 1 à 8, dans lequel,
dans le cadre de la communication entre le réseau central (CN) et la station d'abonné (MS), des messages à envoyer de la station d'abonné (MS) au réseau central (CN) sont transmis avec des informations utiles de la station d'abonné (MS) directement à la première station radio (BS1) côté réseau ou à une autre station radio côté réseau, et de la première station radio (BS1) côté réseau ou de l'autre station radio côté réseau sans réacheminement par la seconde station radio (BS6) côté réseau au réseau central (CN).

10. Procédé selon l'une quelconque des revendications 1 à 7, dans lequel,
dans le cadre de la communication entre le réseau central (CN) et la station d'abonné (MS), des messages à envoyer du réseau central (CN) à la station d'abonné (MS) sont transmis avec des informations utiles du réseau central (CN) à la seconde station radio (BS6) côté réseau, de la seconde station radio (BS6) côté réseau à la première station radio (BS1) côté réseau ou à une autre station radio côté réseau, et de la première station radio (BS1) ou de l'autre station radio côté réseau directement à la station d'abonné (MS).

11. Procédé selon l'une quelconque des revendications 1 à 7 ou la revendication 10, dans lequel,
dans le cadre de la communication entre le réseau central (CN) et la station d'abonné (MS), des messages à envoyer de la station d'abonné (MS) au réseau central (CN) sont transmis avec des informations utiles de la station d'abonné (MS) directement à la première station radio (BS1) côté réseau ou à une autre station radio côté réseau, de la première station radio (BS1) côté réseau ou de l'autre station radio côté réseau à la seconde station radio (BS6) côté réseau, et de la seconde station radio (BS6) côté réseau au réseau central (CN).

12. Procédé selon l'une quelconque des revendications 1 à 11, dans lequel
la station radio côté réseau, avec laquelle la station d'abonné (MS) communique directement, échange, avec une fonction restant identique de la seconde station radio (BS6) côté réseau, en ce qui concerne le réacheminement de messages entre le réseau central (CN) et la station d'abonné (MS).

13. Procédé selon l'une quelconque des revendications 1 à 12, dans lequel
la fonction de la seconde station radio (BS6) côté réseau concernant le réacheminement de messages entre le réseau central (CN) et la station d'abonné (MS), est prise en charge par une troisième station côté réseau.

14. Système de radiocommunication, qui comporte au moins une station d'abonné (MS), ainsi qu'une première station radio (BS1) et une seconde station radio (BS6) côté réseau, reliée à un réseau central (CN), comprenant
des moyens de la première station radio (BS1) côté réseau pour la réception d'un message de demande (IA) de la station d'abonné (MS) pour la première demande de connexion de la station d'abonné (MS) auprès d'une station radio côté réseau après une mise en marche de la station d'abonné (MS),
**caractérisé par**
des moyens pour la transmission dans le cadre d'une communication entre la station d'abonné (MS) et le réseau central (CN) de messages de signalisation (PG, C_PL) à envoyer du réseau central (CN) à la station d'abonné (MS) du réseau central (CN) à la seconde station radio (BS6) côté réseau, de la seconde station radio (BS6) côté réseau à la première station radio (BS1) côté réseau ou à une autre station radio côté réseau, et de la première station radio (BS1) ou de l'autre station radio côté réseau directement à la station d'abonné (MS).
